# EUROPÄISCHE PATENTSCHRIFT

(11) **EP 2 016 299 B1**
(45) Veröffentlichungstag und Bekanntmachung des Hinweises auf die Patenterteilung: **01.12.2010**
(21) Anmeldenummer: 07722344.4
(22) Anmeldetag: 03.05.2007
(51) Int. Cl.: F16C 11/02

(54) **GELENKBUCHSE**
JOINT BUSH
DOUILLE D'ARTICULATION

(30) Priorität: 10.05.2006 DE 102006021992; 06.07.2006 DE 102006031289
(43) Veröffentlichungstag der Anmeldung: 21.01.2009
(73) Patentinhaber: Schmidt, Heiko, 93138 Lappersdorf (DE)
(72) Erfinder: Schmidt, Heiko, 93138 Lappersdorf (DE)
(74) Vertreter: Graf, Helmut
(86) Internationale Anmeldenummer: PCT/DE2007/000787
(87) Internationale Veröffentlichungsnummer: WO 2007/128277

(56) Entgegenhaltungen:
- EP-A- 0 001 343
- EP-A- 0 241 968
- DE-B3-102004 016 417
- FR-E- 52 040
- GB-A- 1 299 535
- GB-A- 2 290 346

## Beschreibung

Die Erfindung bezieht sich auf eine Gelenkbuchse gemäß Oberbegriff Patentanspruch 1. Gelenkbuchsen mit den Merkmalen des Oberbegriffs sind bekannt (GB-A-1299535)

Gelenke zwischen zwei Bauteilen oder Werkstücken werden sehr umfangreich in verschiedensten Bereichen der Technik benötigt, u.a. auch im Automobilbau bzw. in der Automobiltechnik z.B. in sogenannten Gestängen, beispielsweise zwischen der Fahrzeugkarosserie und einem beweglichen Karosserieetoment, beispielsweise zwischen der Fahrzeugkarosserie und einer Motorhaube oder einem Kofferraumcleckel usw. Auch in anderen Bereichen der Technik werden derartige Gelenke benötigt, die dann in der Regel aus einer in einem Bauteil verdrehungssicher gehaltenen Gelenkbuchse und aus einem Gelenkbolzen bestehen, der mit einem Buchsenabschnitt drehbar bzw. schwenkbar in der Gelenkbuchse gelagert ist und mit einem Bolzenkopf gegen axiales Verschieben an einem der Bauteile oder an einem flanschförmigen Abschnitt der Lager- oder Gelenkbuchse anliegend gesichert ist und in dem anderen Bauteil in geeigneter Weise befestigt ist, beispielsweise durch Vernieten. Die verwendeten Gelenkbuchsen sind sehr dünnwandig ausgebildet, wodurch u.a. eine prozesssichere Verarbeitung derartiger Buchsen erschwert wird. Insbesondere bei der Zuführung solcher Buchsen ergeben sich unter Umständen Probleme, und zwar dadurch, dass z.B. in einer Führung aneinander anschließend angeordnete Buchsen sich mit ihren flanschartigen Buchsenabschnitten übereinander schieben und dadurch in einer Führung verklemmen können.

Aufgabe der Erfindung ist es, eine Gelenkbuchse aufzuzeigen, die derartige Nachteile vermeidet. Zur Lösung dieser Aufgabe ist eine Gelenkbuchse entsprechend dem Patentanspruch 1 ausgebildet. Weiterbildungen der Erfindung sind Gegenstand der Unteransprüche.

Bei der erfindungsgemäßen Gelenkbuchse, die vorzugsweise durch Rollen aus einem für derartige Gelenkbuchsen geeigneten metallischen Flachmaterial, beispielsweise aus Stahlblech gefertigt wird, ist der flanschartige Buchsenabschnitt derart geformt, dass er mit seinem freien Rand den hülsenartigen Buchsenabschnitt umschließt und von beiden Buchsenenden axial beabstandet ist. Hierdurch wird eine verbesserte Abstützung von beispielsweise in einer Führung aneinander anschließenden Gelenkbuchsen an ihrem flanschförmigen Buchsenabschnitt erreicht.

Die Erfindung wird im Folgenden anhand der Figuren an einem Ausführungsbeispiel näher erläutert. Es zeigen:
- Fig. 1: in vereinfachter Darstellung ein zwischen zwei Bauteilen gebildetes Gelenk im Wesentlichen bestehend aus einer Gelenkbuchse und einem Gelenkbolzen;
- Fig. 2: in vergrößerter Darstellung und im Schnitt eine Gelenkbuchse vor der Montage;
- Fig. 3: mehrere Gelenkbuchsen in einer Führung eines Setzkopfes;
- Fig. 4: in einer Darstellung wie Figur 2 eine weitere Ausführungsform der Gelenkbuchse vor der Montage.

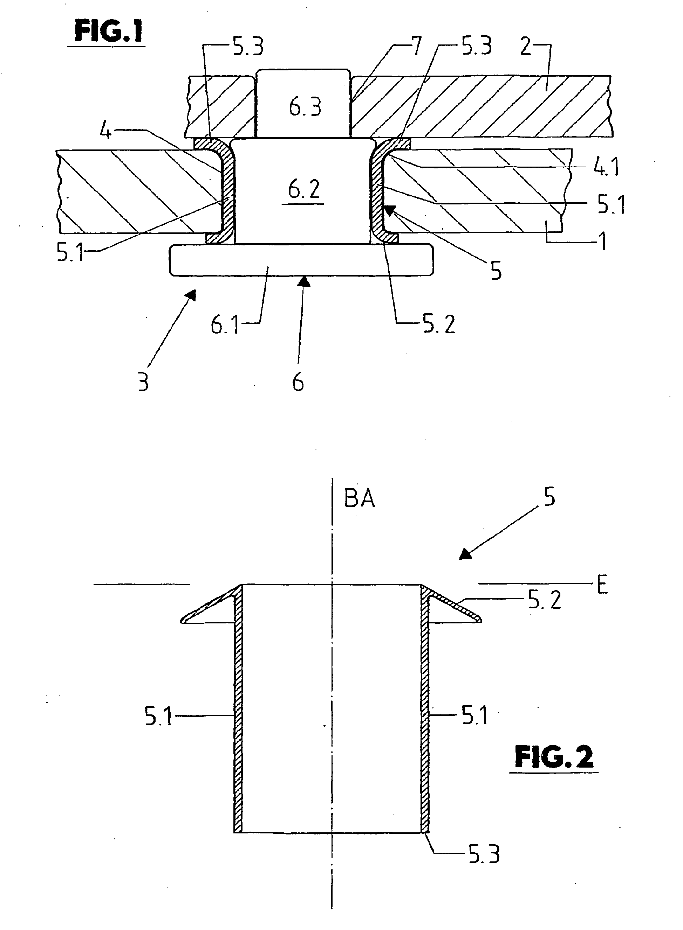

In der Figur 1 sind 1 und 2 zwei aus Metall, beispielsweise aus Metallblech, z.B. Stahlblech durch Stanzen und Biegen gefertigte Werkstücke oder Bauteile, die über ein Gelenk 3 miteinander verbunden sind. Die Bauteile 1 und 2 sind dabei beispielsweise Elemente eines Gestänges.

Das Gelenk 3 besteht im Wesentlichen aus einer in eine Öffnung 4 des Bauteils 1 eingesetzten Gelenkbuchse, die aus einem dünnen, für Gelenkbuchsen geeigneten Material, beispielsweise aus Stahl mit einem hülsenartigen Buchsenkörper 5.1 und mit einem überstehenden Flansch 5.2 gefertigt ist. Die Buchse 5 ist in die Öffnung 4 derart eingesetzt, dass die mit dem Flansch 5.2 an einer dem Bauteil 2 abgewandten Oberflächenseite des Bauteils 1 am Rand der Öffnung 4 anliegt und mit dem buchsenförmigen Abschnitt 5 in der Öffnung 4 aufgenommen ist. Zur Sicherung der Buchse 5 ist der hülsenförmige Abschnitt 5.1 an dem dem flanschförmigen Abschnitt 5.2 abgewandten Ende 5.3 am dortigen Rand der Öffnung 4 umgelegt. Das Gelenk 3 besteht weiterhin aus dem Gelenkbolzen 6, der einen Bolzenkopf 6.1 und an diesen anschließend einen Bolzenabschnitt 6.2 mit größerem Durchmesser und daran anschließend einen Bolzenabschnitt 6.3 mit reduziertem Durchmesser aufweist. Mit dem Bolzenabschnitt 6.2 ist der Gelenkbolzen in der Buchse aufgenommen und zwar derart, dass der Bolzenkopf 6.1 gegen den flanschförmigen Abschnitt 5.2 anliegt. Mit dem Abschnitt 6.3 greift der Gelenkbolzen 6 in eine Öffnung 7 des Bauteils 2 ein und ist dort durch Vernieten beispielsweise in einem Taumel-Niet-Verfahren verankert.

Die Herstellung des Gelenks 3 erfolgt beispielsweise dadurch, dass mit einem geeigneten Werkzeug, beispielsweise mit einem Setzkopf die Buchsen 5 jeweils in eine Öffnung 4 eines Werkstückes 1 eingesetzt und dann mit einem geeigneten Kalibrier- und Umlegewerkzeug in der Öffnung 4 kalibriert und dabei auch der Buchsenrand 5.3 umgelegt wird, und zwar derart, dass der flanschförmige Abschnitt 5.2 möglichst flach gegen die eine Oberflächenseite des Werkstückes 1 am Rand der Öffnung 6 und der umgelegte Buchsenrand 5.3 gegen die andere Oberflächenseite des Werkstückes 1 am dortigen Rand der Öffnung 4 anliegt und die seitliche Anlage- und Gleitfläche für das Bauteil 1 bildet. In die so am Werkstück 1 vorgesehene Buchse wird dann mit einem geeigneten Werkzeug der Gelenkbolzen 6 eingesetzt.

Wie ausgeführt, sind die Buchsen 5 sehr dünnwandig hergestellt, und zwar aus einem Flachmaterial durch Rollen, wobei bei diesem Rollvorgang auch der flanschförmige Abschnitt 5.2 erzeugt wird.

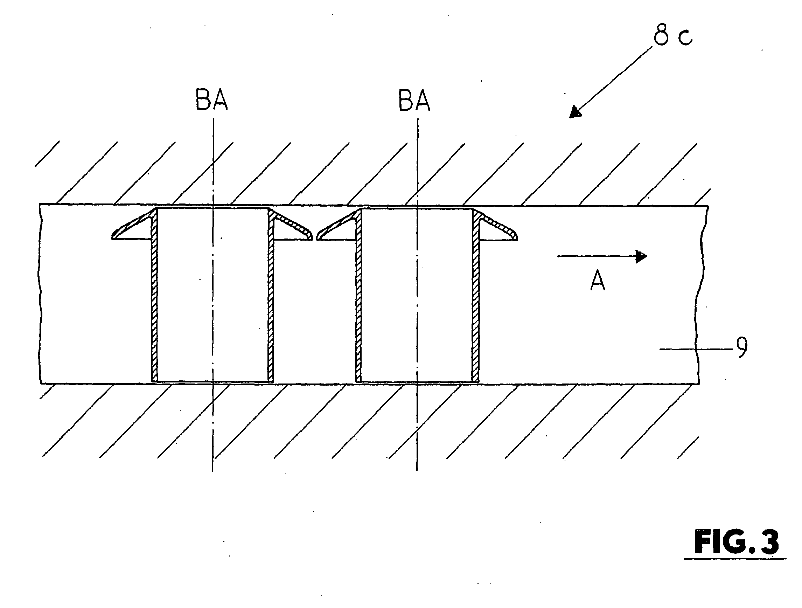

Wie in der Figur 2 dargestellt, ist der flanschförmige Abschnitt 5.2 nicht so ausgebildet, dass er mit seinen Oberflächenseiten in einer Ebene senkrecht zur Buchsenachse BA angeordnet ist, sondern der Abschnitt 5.2 ist zum hülsenförmigen Abschnitt 5.1 hin umgelegt, sodass der von der Buchsenachse BA am weitesten beabstandete äußere freie Rand des Abschnittes 5.2 in einer Achsrichtung parallel zur Buchsenachse BA von der Ebene E beabstandet ist. Diese Ebene ist die Ebene der in der Figur 2 oberen Buchsenöffnung, d.h. der Buchsenöffnung, die von dem Übergang zwischen den Abschnitten 5.1 und 5.2 gebildet ist. Der Abschnitt 5.2 ist somit im Wesentlichen kegelstumpfförmig ausgebildet, und zwar mit einem Kegelwinkel, der sich zu dem Ende 5.3 hin öffnet. Auch eine andere Formgebung des mit seinem äußeren Rand in Richtung des hülsenförmigen Abschnittes 5.1 verformten Abschnittes 5.2 ist möglich, beispielsweise in der Weise, dass dieser Abschnitt zumindest in einem Teilbereich gewölbt oder gekrümmt ist, wie dies in der Figur 3 dargestellt ist.

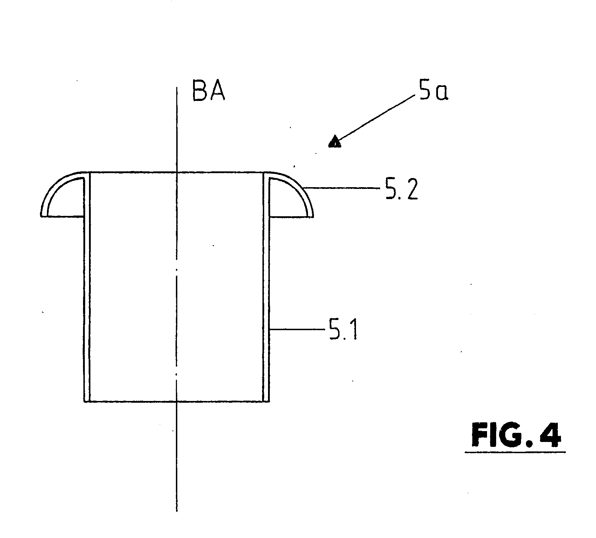

Durch die spezielle Formgebung der Gelenkbuchse 5 bzw. 5a ergibt sich eine vereinfachte und prozesssichere Verarbeitung dieser Buchsen. Insbesondere wird die Zuführung der Buchsen 5 bzw. 5a vereinfacht. Die Figur 4 zeigt in sehr schematischer Darstellung eine Führung 8 beispielsweise eines Buchsensetzkopfes. Die Führung 8 bildet einen Kanal 9, in welchem die Gelenkbuchsen 5 bzw. 5a z.B. durch Förderluft in einer Förderrichtung A bewegt werde, und zwar an eine Bereitstellungsposition des Buchsensetzkopfes, an der dann die Buchsen nacheinander in eine Öffnung 4 eines Werkstücks 1 eingesetzt werden.

In dem Kanal 9 sind die Buchsen 5 dicht aneinander anschließend angeordnet und mit ihrer Buchsenachse BA senkrecht zur Förderrichtung A orientiert. Benachbarte Buchsen liegen jeweils mit dem äußeren Rand des Abschnittes 5.2 gegeneinander an, der durch seine leichte Wölbung eine insbesondere auch im Vergleich zur Materialdicke der Gelenkbuchsen 5 relativ großflächige bzw. breite Abstützung für die jeweils benachbarte Gelenkbuchse bildet, sodass ein die Bearbeitung störendes übereinander schieben benachbarter Gelenkbuchsen an ihren flanschförmigen Abschnitten 5.2 in dem Kanal 9 bzw. in der Führung 8 vermieden ist.

Da der umgelegte Abschnitt 5.2 der jeweiligen Gelenkbuchse 5 beim Einbringen und Fixieren in der Öffnung 4 so verformt wird, dass der Abschnitt 5.2 flächig gegen die eine Oberflächenseite des Werkstückes 1 am Randbereich der Öffnung 4 anliegt, ergibt sich aufgrund der Eigenelastizität des für die Buchsen 5 verwendeten Materials eine zusätzliche Verankerung der Buchsen 5 im Werkstück 1 durch federndes Anliegend der Abschnitte 5.2.

Die Erfindung wurde voranstehend an einem Ausführungsbeispiel beschrieben. Es versteht sich, dass Änderungen sowie Abwandlungen möglich sind. So ist es beispielsweise möglich, den jeweiligen Abschnitt 5.2 auch insgesamt gewölbt auszuführen, wie dies in der Figur 4 für die Gelenkbuchse 5a dargestellt ist.

### Bezugszeichenliste

- 1,2: Bauteil
- 3: Gelenk
- 4: Öffnung
- 5, 5a: Gelenkbuchse
- 5.1: hülsenartiger Buchsenabschnitt
- 5.2: flanschförmiger Buchsenabschnitt oder Flansch
- 5.3: umgelegter Buchsenabschnitt
- 6: Gelenkbolzen
- 6.1: Kopf
- 6.2, 6.3: Bolzenabschnitt
- 7: Öffnung im Bauteil bzw. Werkstück 2
- 8: Führung
- 9: Führungskanal

- A: Förderrichtung
- E: Ebene
- BA: Buchsenachse

## Patentansprüche

1. Gelenkbuchse zur Verwendung bei einem Gelenk (3) zwischen zwei Bauteilen oder Werkstücken (3), mit einem ersten, hülsenartigen Buchsenabschnitt (5.1), der an einem Hülsenende in einen zweiten, flanschartigen Buchsenabschnitt (5.2) übergeht, welche über die Umfangsfläche des ersten Buchsenabschnittes (5.1) weg steht, wobei der zweite Buchsenabschnitt (5.2) mit seinem freien Rand den ersten Buchsenabschnitt (5.1) umschließt und in einer Achsrichtung parallel zur Buchsenachse (BA) von dem ersten Hülsenende beabstandet ist,
**dadurch gekennzeichnet,**
**dass** der zweite Buchsenabschnitt (5.2) am äußeren Rand mit einer leichten Wölbung ausgebildet ist.

2. Gelenkbuchse nach Anspruch 1, **dadurch gekennzeichnet, dass** sie aus einem Flachmaterial, vorzugsweise aus einem metallischen Flachmaterial hergestellt ist.

3. Gelenkbuchse nach Anspruch 2, **dadurch gekennzeichnet, dass** sei aus dem metallischen Flachmaterial durch Rollen hergestellt ist.

4. Gelenkbuchse nach einem der vorhergehenden Ansprüche, **dadurch gekennzeichnet, dass** der zweite Buchsenabschnitt (5.2) kegelstumpf- oder kegelringartig ausgeführt ist.

5. Gelenkbuchse nach einem der vorhergehenden Ansprüche, **dadurch gekennzeichnet**, der zweite Buchsenabschnitt (5.2) zumindest in Teilbereichen gewölbt ausgebildet ist

## Claims

1. Joint bush for use in an articulated joint (3) between two component parts or workpieces (3), with a first sleeve-type socket section (5.1) which changes at one sleeve end into a second flange-type socket section (5.2), which projects beyond the circumferential surface of the first socket section (5.1) wherein the second socket section (5.2) with its free end surrounds the first socket section (5.1) and is spaced from the first sleeve end in an axial direction parallel to the socket axis (BA),
**characterised in that** the second socket section (5.2) is formed at the outer edge with a slight curvature.

2. Joint bush according to claim 1 **characterised in that** it is made from a flat material, preferably from a metal flat material.

3. Joint bush according to claim 2 **characterised in that** it is made from the metal flat material by rolling.

4. Joint bush according to one of the preceding claims **characterised in that** the second socket section (5.2) is designed frusto-conical or conical ring shape.

5. Joint bush according to one of the preceding claims **characterised in that** the second socket section (5.2) is designed curved at least in some partial areas.

## Revendications

1. Douille articulée pour usage dans une articulation (3) entre deux composants ou pièces (3), comprenant une première section de douille (5.1) en forme de manchon, qui se fond à une extrémité du manchon dans une seconde section de douille (5.2) en forme de bride, qui s'étend par-dessus la surface périphérique de la première section de douille (5.1), dans laquelle la seconde section de douille (5.2) enserre avec son bord libre la première section de douille (5.1) et est distante de la première extrémité de manchon dans une direction axiale parallèle à l'axe (BA) de la douille,
**caractérisée en ce que**
la seconde section de douille (5.2) présente un léger cintrage sur le bord externe.

2. Douille articulée selon la revendication 1, **caractérisée en ce qu'**elle est formée d'un matériau plat, de préférence d'un matériau métallique plat.

3. Douille articulée selon la revendication 2, **caractérisée en ce qu'**elle est formée du matériau métallique plat par roulage.

4. Douille articulée selon l'une quelconque des revendications précédentes, **caractérisée en ce que** la seconde section de douille (5.2) se présente sous la forme d'un tronc de cône ou d'une bague conique.

5. Douille articulée selon l'une quelconque des revendications précédentes, **caractérisée en ce que** la seconde section de douille (5.2) est cintrée au moins dans des zones partielles.
